# EUROPÄISCHE PATENTSCHRIFT

(11) **EP 0 769 652 B1**
(45) Veröffentlichungstag und Bekanntmachung des Hinweises auf die Patenterteilung: **26.09.2001**
(21) Anmeldenummer: 96114780.8
(22) Anmeldetag: 16.09.1996
(51) Int. Cl.: F16L 55/168

(54) **Leckdichtvorrichtung für ein Abdichten von Behältern**
Device for sealing leaks in vessels
Dispositif pour étancher des fuites dans des récipients

(30) Priorität: 09.10.1995 DE 19537412; 26.04.1996 DE 19616856
(43) Veröffentlichungstag der Anmeldung: 23.04.1997
(73) Patentinhaber: Manfred Vetter GmbH & Comp., 53909 Zülpich (DE)
(72) Erfinder: Vetter, Manfred, D-53909 Zülpich (DE)
(74) Vertreter: Bauer, Wulf, Dr.

(56) Entgegenhaltungen:
- DE-A- 3 914 435
- US-A- 2 772 804
- US-A- 2 781 939
- US-A- 4 880 035

## Beschreibung

Die Erfindung bezieht sich auf eine Leckdichtvorrichtung nach dem Oberbegriff des Patentanspruchs 1.

Derartige Leckdichtvorrichtungen werden in Katastrophenfällen, beispielsweise bei Begegnungsunfällen mit Tankwagen, Rissen in Kesselwagen, Rohrleitungen oder Reaktoren verwendet. Ziel ist es, rasch das Leck, aus dem eine umweltgefährdende Flüssigkeit austreten kann, abzudichten. Bei solchen Unfällen kommt es auf schnelle Reaktion an, das Leck muß so schnell wie möglich abgedichtet sein.

Aus der US-Patentschrift 4,880,035 ist eine Leckdichtvorrichtung der eingangs genannten Art bekannt. Bei ihr umgreifen die Spannmittel den Behälter, hierzu sind die Spannmittel ausreichend lang bemessen. Auf diese Weise wird ein guter Sitz der Spannmittel, eine hohe Andruckkraft des Leckdichtkissens und eine dauerhaft Abstützung des Leckdichtkissens gegen das Leck erreicht. Nachteilig ist allerdings, daß die Spannmittel um den gesamten Behälter herumgeführt werden müssen. Dies ist nicht immer möglich, so beispielsweise bei umgestürzten Tanklastwagen und verlegten Rohrleitungen. Bei Lecks im Bereich von Abzweigungen oder mechanischen Stützen ist es zeitaufwendig und zumeist nur mit hohem Aufwand durchführbar.

Aus der DE 39 14 435 A1 ist eine Abdichtvorrichtung für Leckageöffnungen an Behältern, Apparaten oder Rohrleitungen bekannt, bei der mindestens zwei Saugglocken an einem gemeinsamen Tragelement angeordnet und mit einer Vakuumpumpe verbunden sind. An dem Tragelement ist eine Spindelmutter vorgesehen, in welcher eine Spindel drehbar geführt ist. An ihr ist in der gleichen Richtung, in welcher die Saugglocken offen sind, eine mit einer Dichtungsauflage aus chemisch resestentem Material belegte Druckplatte vorgesehen. An ihrem anderen Ende ist ein Drehgriff angeordnet. Mit dieser Vorrichtung lassen sich nur kleinere Lecks und diese auch nur bei nicht zu stark gekrümmten Oberflächen abdichten.

Hier setzt nun die Erfindung ein. Sie hat es sich zur Aufgabe gemacht, den Einsatz des ansich bekannten Leckdichtkissens dadurch zu vereinfachen, daß weniger Zeit benötigt wird, um die Spannmittel zu verankern und Druck auf das Leckdichtkissen ausüben zu können.

Ausgehend von der Leckdichtvorrichtung der eingangs genannten Art wird diese Aufgabe durch die Merkmale des Patentanspruchs 1 gelöst. Diese Hafteinrichtungen werden in Nähe des Leckdichtkissens am Wandbereich des Behälters festgelegt, sie sind so konstruiert, daß sie möglichst rasch am Wandbereich angebracht werden können und dort so gut wie möglich halten.

Dadurch ist es nun nicht mehr notwendig, die Spannmittel um den gesamten Behälter herumzuführen, vielmehr können die erfindungsgemäß vorgesehenen Hafteinrichtungen so in Nähe des Leckdichtkissens plaziert werden, daß die Spannmittel relativ kurz bleiben und ein rascher Aufbau der Leckdichtvorrichtung erzielt wird. Auf diese Weise wird das häufig zeitraubende Festzurren und Anspannen der Spannmittel um den Behälter vermieden, der Spannvorgang wird zeitlich deutlich verkürzt.

Die Hafteinrichtungen haben jeweils eine Kontaktfläche, mit der sie auf den Wandbereich aufgesetzt werden. Der Halt kann durch Unterdruck, also Ausbildung der Hafteinrichtungen als Saugnäpfe, durch Kleben, also Kontaktflächen sind mit Klebstoff beschichtet oder es wird ein Klebstoff aufgetragen; oder durch Magnete erreicht werden. Einige Ausführungen dieser Hafteinrichtungen sind später wieder von dem Wandbereich lösbar, ohne daß Rückstände verbleiben, andere können auf Dauer nicht wieder entfernt werden.

Als besonders vorteilhaft hat es sich erwiesen, wenn die Kontaktfläche einen Teilbereich, beispielsweise einen Ringbereich oder verschiedene Stellen hat, die mit einem Haftkleber beschichtet sind. Die Haftung ist dabei so bemessen, daß die Hafteinrichtung selbst, ohne durch die Spannmittel oder ihren Zug belastet zu sein, am Wandbereich haftet. Dadurch wir ein Anfangshalt erzielt. Die eigentliche Verbindung wird dann über Unterdruck, oder durch ein Klebmittel erreicht.

Als besonders vorteilhaft hat es sich erwiesen, in den Spannmitteln und/oder mindestens einer Hafteinrichtung einen Kraftmesser anzuordnen, der auf die in der Hafteinrichtung bzw. in den Spannmitteln vorhandene Zugkraft anspricht. Dadurch läßt sich vermeiden, daß die Hafteinrichtungen durch zu hohes Anspannen abscheren. Vorzugsweise ist ein Kraftmesser vorgesehen, der entweder nur eine Anzeige hat, sodaß eine zu große Zugkraft erkannt werden kann, und/oder der eine Überlastsicherung steuert, die die Zugkraft begrenzt. In einer typischen Ausführung ist eine Feder als Kraftmesser oder ein unter Kraft verformbares Teil vorgesehen.

Schließlich hat es sich als besonders vorteilhaft erwiesen, das Leckdichtkissen modular aufzubauen. Das Leckdichtkissen besteht dabei aus einer Platte und einem aufblasbaren Teil. Es sind mehrere, unterschiedliche aufblasbare Teile vorgesehen, die austauschbar mit der Platte verbindbar sind. Hierzu hat diese eine Haftbeschichtung, beispielsweise eine Schicht aus einem Klettverschluß. Entsprechend haben die unterschiedlichen aufblasbaren Teile eine Haftbeschichtung an der zugehörigen geeigneten Kontaktfläche. Auf diese Weise können unterschiedliche Anordnungen aus einem aufblasbaren Teil und der Platte zusammengesetzt werden, sodaß jeweils eine günstige Konstellation für das tatsächlich vorliegende Leck erstellt werden kann.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung näher erläutert werden. In dieser zeigen:
FIG. 1: Eine perspektivische Darstellung einer Draufsicht auf eine Leckdichtvorrichtung nach der Erfindung, die auf einen Wandbereich aufgesetzt ist,
FIG. 2: ein Schnittbild durch eine Hafteinrichtung,
FIG. 3: eine Seitenansicht einer Hafteinrichtung mit Schnitt durch einen Wandbereich und FIG. 4: eine Untersicht einer Hafteinrichtung.

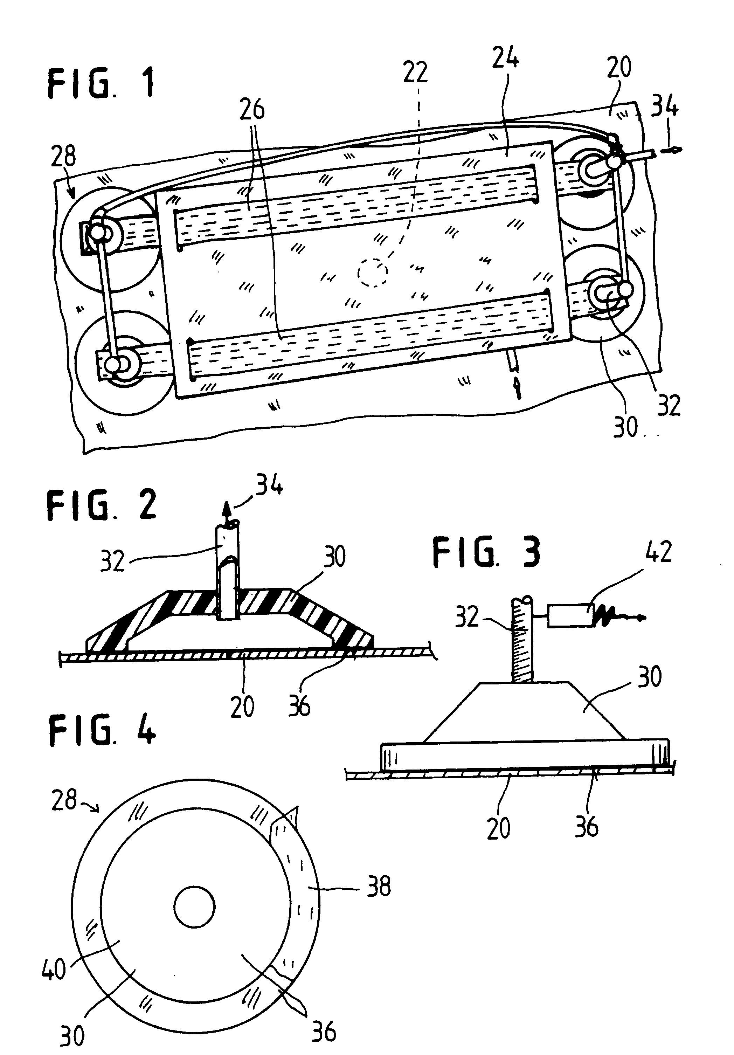

Aus den Figuren 1 - 3 ist jeweils ein Wandbereich 20 eines Behälters ersichtlich, der Behälter ist beispielsweise ein Tank eines LKW's, ein Tank eines Eisenbahnwaggons, eine Rohrleitung, ein Reaktor einer chemischen Fabrik usw. In dem Wandbereich befindet sich ein Leck 22. Es wird durch ein Leckdichtkissen überbrückt und abgedichtet, derartige Leckdichtkissen 24 sind bekannt und müssen hier nicht näher beschrieben werden. Das Leckdichtkissen 24 wird durch Spannmittel 26 gegen den Wandbereich 20 gedrückt, sodaß eine Abdichtung zwischen ihm und dem Wandbereich 20 erzielt wird. Als Spannmittel sind zwei Gurte vorgesehen, deren Gesamtlänge nur etwas größer ist als die Abmessung des Leckdichtkissens 24, das sie übergreifen.

An den Enden jedes Gurtes befindet sich je eine Hafteinrichtung 28, sie ist in unmittelbarer Nähe des Leckdichtkissens 24 auf den Wandbereich 20 aufgesetzt und hält dort in unterschiedlicher Art, nämlich durch Unterdruck, durch Kleben, in Kombination, dieser Mittel usw. Hierauf wird noch später eingegangen.

In den gezeigten Ausführungsbeispielen haben die Hafteinrichtungen 28 jeweils einen kreisrunden Teller 30, mit dem sie auf der Außenfläche des Wandbereichs 20 aufliegen. Vom Teller ragt mittig und quer zum Wandbereich 20 ein Stift 32 nach außen vor, der rohrförmig ausgeführt sein kann. An ihm sind die Enden der Spannmittel 26 festgelegt. Es sind insgesamt vier Hafteinrichtungen 28 vorgesehen. Mindestens sind zwei nötig, es können mehr als vier angebracht werden. Der Teller 28 kann auch unrund, z. B. oval oder regelmäßig vieleckig sein.

Aus FIG. 2 ist eine mit Unterdruck arbeitende Hafteinrichtung 28 ersichtlich, wie sie auch in FIG. 1 vierfach eingesetzt ist. Es ist jeweils ein Pfeil 34 eingezeichnet, der erkenntlich machen soll, daß in der Pfeilrichtung gesaugt wird, sodaß zwischen Teller 30 und Wandbereich 20 ein Raum mit Unterdruck aufrechterhalten wird.

Der Unterdruck wird durch irgendeine beliebige Vakuumpumpe erreicht, beispielsweise durch eine Luftstrahlpumpe. Bei dieser wird wie bei einer Wasserstrahlpumpe Gas unter Druck einer Düse zugeführt, aus dieser tritt es als ein Gasstrahl aus, dieser reißt dabei die in seiner Umgebung befindlichen Luftmoleküle mit.

Die Teller 30 sind z. B. aus einem Gummimaterial hergestellt, das relativ steif eingestellt ist, aber ausreichend flexibel ist, um sich an gebogene Wandbereiche 20 anlegen zu können. Die Teller 30 haben jeweils eine Auflagefläche 36, mit der sie am Wandbereich 20 anliegen, die Aufnahmefläche ist beispielsweise ringförmig, wie in den Ausführungsbeispielen nach dem Figuren 2 und 4. In der Ausführung nach FIG. 2 dient die Auflagefläche 36, die ringförmig ist und außen verläuft, der Abdichtung gegenüber dem Wandbereich 20. Die Auflagefläche 36 kann mit einem Haftkleber beschichtet sein. Hierdurch wird eine möglichst schnelle Anfangshaftung erreicht und erzielt, daß die noch unbelastete Hafteinrichtung 28 auf einen Wandbereich 20 aufgesetzt werden kann und dort erst einmal selbst hält. Die mit einem Haftkleber versehene Auflagefläche 36 ist vorzugsweise durch eine Schutzfolie 38 abgedeckt. Diese wird entfernt, bevor die Hafteinrichtung 28 auf einen Wandbereich 20 aufgesetzt wird. In FIG. 4 ist ein Teilstück einer derartigen transparent ausgeführten Schutzfolie 28 gezeigt.

Im Ausführungsbespiel nach FIG. 3 macht die Auflagefläche 36 im wesentlichen die gesamte Unterfläche der Hafteinrichtung 28 aus. Es wird also kein Hohlraum wie in der Ausführung nach FIG. 2 gebildet. Die Auflagefläche 36 und/oder der entsprechende Teil des Wandbereichs 20 wird mit einem schnellwirkendem Klebemittel 40 bestrichen, das nach Abbinden einen sicheren Halt zwischen der Hafteinrichtung 28 und dem Wandbereich 20 vermittelt. Es eignen sich hier beispielsweise sogenannte Sekundenkleber, beispielsweise auf Zyanid-Basis. Auch in der Ausführung nach FIG. 3 kann ein Teil der Auflagefläche 36 mit einem Haftkleber beschichtet sein, um eine Anfangshaftung zu erzielen. Dadurch wird vermieden, daß während der Abbindezeit die Hafteinrichtung 28 gegen den Wandbereich 20 gedrückt gehalten werden muß. Eine derartige Ausführung ist in FIG. 4 gezeigt, dort ist die Auflagefläche 36 aufgeteilt in eine äußere, ringförmige Fläche für eine Anfangshaftung und eine innere Fläche, auf die ein Klebmittel aufgetragen wird oder bereits aufgetragen ist und mit einer Schutzfolie entsprechend abgedeckt ist.

In FIG. 3 ist noch eine Überlastsicherung 42 bzw. ein Kraftmesser gezeigt, sie ist hier nur schematisch dargestellt. Ausgeführt ist sie als eine Hülse, die eine als Schraubenfeder ausgeführte Zugfeder übergreift. Die Hülse ist mit einem Ende der Zugfeder verbunden. Greift am anderen Ende der Zugfeder eine Kraft an, so kommt die Zugfeder mehr und mehr aus der Hülse heraus. Übersteigt die Zugkraft ein gewisses Maß, so kommen Windungen der Feder zum Vorschein, die eine unterschiedliche Farbgebung haben, beispielsweise rot. Hieran ist eine Überlast zu erkennen. Andere Ausführungen der Überlastanzeige sind möglich. Angestrebt wird bei der Überlastanzeige, daß entweder eine Überlast durch eine Anzeigevorrichtung, wie im oben beschriebenen Fall erkannt werden kann, oder daß bei Überlast sich automatisch eine Längenänderung einstellt, die aber begrenzt ist.

## Patentansprüche

1. Leckdichtvorrichtung für ein Abdichten von Behältern, einschließlich Rohren, die ein Leck (22) aufweisen, das sich in einem Wandbereich (20) des Behälters befindet, mit einem das Leck (22) überdeckenden aufblasbaren Leckdichtkissen (24) und mit diesem zusammenwirkenden Spannmitteln (26), welche im wesentlichen parallel zum Wandbereich (20) verlaufen, gespannt sind und das Leckdichtkissen (24) gegen den Wandbereich (20) ziehen, wobei mehrere als Saugnäpfe ausgebildete Hafteinrichtungen (28) vorgesehen sind, die in Nähe des Leckdichtkissens (24) am Wandbereich (20) befestigbar sind und an denen als Gurte ausgebildete Spannmittel angreifen, deren Gesamtlänge nur etwas größer ist als die Abmessung des Leckdichtkissens (24).

2. Leckdichtvorrichtung nach Anspruch 1, **dadurch gekennzeichnet, daß** die Hafteinrichtungen (28) mit einer Unterdruckpumpe zur Erzeugung eines Unterdrucks verbunden sind.

3. Leckdichtvorrichtung nach Anspruch 1, **dadurch gekennzeichnet, daß** die Hafteinrichtungen (28) mit dem Wandbereich (20) zusammenwirkende Klebflächen aufweisen, die mit einem hochfesten Klebemittel belegt oder belegbar sind, insbesondere mit einem in Sekunden abbindenden Klebemittel.

4. Leckdichtvorrichtung nach Anspruch 1, **dadurch gekennzeichnet, daß** die Hafteinrichtungen (28) einen mit dem Wandbereich (20) zusammenwirkenden Kontaktbereich aufweisen, der teilweise mit einer Haftbeschichtung, insbesondere einem Haftkleber, verbunden ist, um beim Ansetzen der Hafteinrichtung (28) an den Wandbereich (20) eine anfängliche, sofort wirkende Haftung zu erreichen.

5. Leckdichtvorrichtung nach Anspruch 1, **dadurch gekennzeichnet, daß** den Hafteinrichtungen (28) und/oder den Spannmitteln (26) ein Kraftmesser (42) zugeordnet ist, mit dem bei einer zu hohen Zugkraft, die zu einem Abreißen einer Hafteinrichtung (28) führen könnte, eine Anzeige erfolgt, vorzugsweise eine Überlastsicherung ausgelöst wird.

6. Leckdichtvorrichtung nach Anspruch 1, **dadurch gekennzeichnet, daß** das Leckdichtkissen (24) eine zugfeste, flexible oder steife Platte, die mit den Spannmitteln (26) zusammenwirkt, und einen zwischen dieser und dem Wandbereich (20) befindlichen aufblasbaren Teil hat.

7. Leckdichtvorrichtung nach Anspruch 6, **dadurch gekennzeichnet, daß** die Platte an ihrer dem Wandbereich (20) zugewandten Fläche mit einer Haftbeschichtung, insbesondere einer Klettbeschichtung versehen ist und daß mehrere unterschiedliche aufblasbare Teile vorgesehen sind, die ebenfalls eine Haftbeschichtung tragen und austauschbar mit der Platte verbindbar sind.

## Claims

1. Leak sealing device for sealing containers, inclusive of pipes, that have a leak (22) in a wall region (20) of the container with an inflatable leak sealing pad (24) covering the leak (22) and with tension means that are arranged substantially parallel to the wall region (20), cooperate with said sealing pad, are tensioned and pull the leak sealing pad (24) against the wall region (20), wherein several bonding facilities (28) devised as suction cups are provided which can be fastened to the wall region (20) in the vicinity of the leak sealing pad (24) and on which tension means designed as belts are acting, the overall length of said tension means being only slightly longer than the measure of the leak sealing pad (24).

2. Leak sealing device according to claim 1, **characterized in that** the bonding facilities (28) are connected to a vacuum pump for generating a subatmospheric pressure.

3. Leak sealing device according to claim 1, **characterized in that** the bonding facilities (28) are provided with adhesive areas that cooperate with the wall region (20) and are coated or may be coated with a high-strength adhesive, more specifically with an adhesive that makes a strong bond within seconds.

4. Leak sealing device according to claim 1, **characterized in that** the bonding facilities (28) are provided with a contact region that cooperates with the wall region (20) and that is in parts connected to an adhesive coating, more specifically to a pressure sensitive adhesive, for immediately achieving an initial, instantaneous bond upon applying the bonding facility (28) to the wall region (20).

5. Leak sealing device according to claim 1, **characterized in that** the bonding facilities (28) and/or the tension means (26) are allocated a load sensing device (42) that indicates when the tensile load is too high and could cause a bonding facility (28) to tear off and that preferably triggers an overload protection.

6. Leak sealing device according to claim 1, **characterized in that** the leak sealing pad (24) has a plate, which has tensile strength or is flexible or rigid and which cooperates with the tension means (26), and an inflatable part located between said plate and the wall region (20).

7. Leak sealing device according to claim 6, **characterized in that**, on its area facing the wall region (20), the plate is provided with an adhesive coating, more specifically with a Velcro coating and that several different inflatable parts are provided that are also coated with an adhesive coating and that can exchangeably be connected to the plate.

## Revendications

1. Dispositif d'étanchéification de fuites pour une étanchéification de réservoirs, y compris les tuyaux, qui présentent une fuite (22) qui se trouve dans une zone de paroi (20) du réservoir, avec un coussin gonflable (24) d'étanchéification (ou d'étanchéité) de fuite qui recouvre ladite fuite (22) et avec des moyens de tension (26) agissant de concert avec celui-ci, qui s'étendent pour l'essentiel parallèlement à ladite zone de paroi (20), sont tendus et tirent ledit coussin (24) d'étanchéification de fuite contre la zone de paroi (20), plusieurs dispositifs adhésifs (28) réalisés comme ventouses étant prévus qui peuvent être fixés à proximité dudit coussin (24) d'étanchéification de fuite sur la zone de paroi (20) et sur lesquels se prennent des moyens de tension réalisés comme sangles, dont la longueur totale est seulement un peu plus importante que la dimension du coussin (24) d'étanchéification de fuite.

2. Dispositif d'étanchéification de fuites selon la revendication 1, **caractérisé par** le fait que les dispositifs adhésifs (28) sont reliés à une pompe à vide pour la génération d'une dépression.

3. Dispositif d'étanchéification de fuites selon la revendication 1, **caractérisé par** le fait que les dispositifs adhésifs (28) présentent des surfaces collantes coopérant avec ladite zone de paroi (20), qui sont revêtues ou peuvent être revêtues d'un adhésif à solidité élevée, en particulier d'un adhésif prenant en quelques secondes.

4. Dispositif d'étanchéification de fuites selon la revendication 1, **caractérisé par** le fait que les dispositifs adhésifs (28) présentent une zone de contact qui agit de concert avec ladite zone de paroi (20) et qui est pourvue en partie d'un revêtement adhésif, en particulier d'une masse autocollante, afin d'atteindre une adhérence initiale immédiatement efficace lorsque le dispositif adhésif (28) est appliqué contre la zone de paroi (20).

5. Dispositif d'étanchéification de fuites selon la revendication 1, **caractérisé par** le fait qu'un dispositif à mesurer la force (42) est associé aux dispositifs adhésifs (28) et/ou aux moyens de tension (26), qui, dans le cas d'une trop grande force de traction qui pourrait conduire à ce qu'un dispositif adhésif (28) soit arraché, donne une indication, de préférence déclenche une protection contre les surcharges.

6. Dispositif d'étanchéification de fuites selon la revendication 1, **caractérisé par** le fait que ledit coussin d'étanchéité de fuite (24) présente une plaque résistante à la traction, flexible ou rigide qui agit de concert avec les moyens de tension (26), et une partie gonflable qui est située entre cette plaque et ladite zone de paroi (20).

7. Dispositif d'étanchéification de fuites selon la revendication 6, **caractérisé par** le fait que la surface de la plaque, qui montre vers la zone de paroi (20) est pourvue d'un revêtement adhésif, en particulier d'un revêtement Velcro, et que plusieurs parties gonflables différentes sont prévues qui, elles aussi, sont pourvues d'un revêtement adhésif et qui peuvent être reliées d'une manière échangeable avec ladite plaque.
